# EUROPEAN PATENT SPECIFICATION

(11) **EP 0 426 308 B1**
(45) Date of publication and mention of the grant of the patent: **22.09.1993**
(21) Application number: 90310954.4
(22) Date of filing: 05.10.1990
(51) Int. Cl.: B65H 75/00, B65B 11/04

(54) **Support stand for film dispenser reel**
Halterung für eine Folien-Spende-Spule
Dispositif de support pour un dispensateur de film

(30) Priority: 03.11.1989 GB 8924807; 12.12.1989 GB 8928099
(43) Date of publication of application: 08.05.1991
(73) Proprietor: KVERNELAND UNDERHAUG AS, N-4350 Naerbo (NO)
(72) Inventor: Haugstad, Jan, N-4350 Naerbo (NO); Obrestad, Bjarne, 4350 Naerbo (NO)
(74) Representative: Orr, William McLean

(56) References cited:
- EP-A- 0 306 573
- DE-A- 3 608 748
- DE-C- 2 645 220
- FR-A- 2 600 973
- GB-A- 2 026 049
- GB-A- 2 188 606

## Description

This invention relates to a support stand for mounting a film dispenser reel, and has been developed primarily, though not exclusively, in connection with a support stand which forms part of a bale wrapper apparatus.

One known form of a bale wrapper apparatus comprises a platform which has a pair of laterally spaced horizontal support rollers on which a cylindrical bale of e.g. straw, cut grass or hay can be supported, and which rollers rotate the bale about its horizontal axis while the entire platform is rotated about a vertical axis. During this simultaneous rotation of the bale about both the vertical and horizontal axes, a stretchable plastics film is withdrawn from a film dispenser reel and is caused to form a substantially air tight spirally wound wrapping around the bale. The film is self-adhesive on one side, and forms an overlapping spiral winding around the bale which progressively envelopes the bale.

In this one known form of bale wrapper apparatus, the film dispenser reel is carried by a support stand which is fixed, so that the film is withdrawn (after initial attachment of the film end to the bale) by the rotation of the platform.

The present invention has been developed primarily in connection with a support stand for mounting a film dispenser reel to be used with this known form of bale wrapper apparatus.

A special type of stretchable plastics film has been developed for use in wrapping cylindrical bales, and having self-adhesive properties on one side, and for a number of years this film has been supplied in supply reels which are 500mm long i.e. the width of the film band withdrawn from the reel is 500mm. Dispenser reels of this size can be handled manually without much difficulty, and so as to be mounted readily as replacement reels on existing support stands. The reels have a hollow cylindrical former on which the film band is wound, and the existing stands have a vertical mounting spindle on which the cylindrical former can be mounted.

However, it is desirable to be able to use films of greater width than 500mm reels, since this will enable the wrapping operation to be carried out more quickly as this will reduce the number of turns that the film band must be taken around the bale in order to envelope the bale. Bearing in mind that successive turns must partially overlap each other, and the fact that any undesirable air and / or water ingress to the wrapped bale is most likely to take place along the region of any improperly overlapping edges, the risks of this occuring will be reduced by the use of a wider band of film.

There would therefore be clear technical advantage in using a wider film band, but the increase to, say, a 750mm reel would make the reel harder to handle, and particularly much more difficult to load onto the mounting spindle of existing support stands, in that the entire reel will have to be raised so that the lower end of the reel is positioned above the upper end of the mounting spindle, before the reel can be allowed to descent as a sliding fit over the spindle.

It is known from DE-A-3608748 to provide an apparatus for wrapping a stack of goods on a rotating pallet (carried by a platform rotating about a vertical axis) with a pre-stretched film which is withdrawn under tension from a supply reel of the film. During the wrapping of film around the stack of goods, the supply reel is moved upwardly on a support column, so that a helical winding of film is applied to the stack.

The lower end of the supply reel is supported by a cup shaped holder which is carried on a horizontal support arm, whereas the upper end of the supply reel is engaged by a cup shaped holder carried as at the lower end of a vertically adjustable support. Vertical adjustment of this support will enable a spent supply reel to be replaced by a fresh supply reel.

However, given that the vertically adjustable support will have to be manually engaged and operated from above, this will make supply reel replacement a difficult task for one operative, who would find it difficult to adjust the support and de-mount a spent reel and replace with a fresh supply reel all in one operation, and especially if the replacement reel should happen to be of a different length to the spent reel.

The known apparatus is primarily designed for use in a factory or warehouse environment, whereas the invention is primarily concerned with wrapping apparatus for use in more difficult operating conditions of an agricultural environment e.g. to wrap cylindrical bales of grass, hay or straw in the field. In these more difficult conditions, it will be important to provide a reel support arrangement which can be operated easily and reliably, and especially when the longer type of bale wrapping film reels (750mm) are employed which, as discussed above, are heavier, larger and more difficult to handle than the previously more common shorter length of supply reels (500mm).

According to the invention there is provided a support stand for mounting a film dispenser reel in a substantially vertical attitude, said reel comprising a hollow cylindrical former and a band of plastics film wound around the former, and said stand comprising:
an upright support;
a lower reel holder mounted on the support and arranged to support a lower end of the reel, and an upper reel holder mounted on the support and arranged to engage an upper end of the reel;
characterised in that the upper holder is mounted on a carrier arm which is pivotally adjustably mounted on the support, and in that a lever is coupled with the carrier arm and is operable to adjust the
upper holder between an operative position of engagement with the upper end of the reel, and a release positionpermitting the reel to be mounted in or dismounted from engagement with the lower holder.

Thus, by virtue of the pivotally adjustable mounting of the upper holder on the support, and the provisions of the adjusting lever which can easily be reached and operated, it is a simple matter to manipulate even long reels into the support stand, as it is only necessary initially to line up and fit the lower end of the reel with the lower holder , and then bring the upper holder into engagement with the upper end of the reel.

Usually, the film dispenser reels are supplied with hollow cylindrical formers, and therefore the holders may be shaped to fit into the ends of the formers. The holders are therefore preferably cup-shaped, so as to be received by the upper and lower ends of the former. However, if different types of reels are used, evidently the design of the holders will be altered to enable the holders to function so as to rotatably mount the reel in the support stand.

Conveniently, means is provided to enable the lever to be releasably retained in either of its two positions, which will allow one person to carry out a reel replacement operation.

When a long reel is to be fitted in the support stand, such as a film reel of 750mm band width, the ends of the cylindrical former may form suitable mounting sockets into which the cup-shaped holders can be received. However, if it should be required to use smaller reels with the support stand, such as the existing 500mm band width film reels, then this can readily be achieved without modification of the support stand being required, provided that tubular adapters are coupled with each end of the cylindrical former of the smaller film reel. Each adapter takes the form of an extension piece to bring the overall length of the smaller reel up to that of the longer reel, but each adapter also has an end socket in which the respective cup-shaped holder can be received.

The upright support preferably comprises a column which can be rigidly mounted in an upright position on a bale wrapper apparatus, and pre-stretch rollers may be arranged alongside the film reel in known manner, for example as disclosed in EP 0291483. To enable film to be withdrawn from the film reel against resilient opposition after engagement by the pre-stretch rollers, preferably the upper and lower holders, and also the pre-stretch rollers, form a unitary assembly which is capable of pivoting about the axis of the support column, and one or more springs are arranged to bias the unit about the axis of the column in a direction which is opposed to the direction of withdrawal of film from the reel.

Preferably, the upright support is adjustable in height so as to permit adjustment in height of the film dispenser reel relative to a bale which is to be wrapped.

An adjusting mechanism for adjusting the height of the support may comprise a screw threaded adjustment mechanism coupled with the upright support, and which facilitates the height adjustment of the film dispenser reel, to suit different sizes of bale. Bearing in mind that the entire support stand and film dispenser reel have to be vertically adjusted, it is advantageous for this to be able to be carried out using a screw threaded adjustment mechanism, which can be operated with ease by people of small stature.

Preferably, a hand operated crank is coupled with the adjustment mechanism.

One embodiment of support stand according to the invention will now be described in detail, by way of example only, with reference to the accompanying drawings, in which:
Figure 1 is a side view of the support stand for mounting a film dispenser reel in a substantially vertical attitude, without showing either of the two sizes of film dispenser reel which can be mounted therein;
Figure 2 is a detailed view showing one of the two sizes of film dispenser reel mounted in the support stand;
Figure 2a is a detail view of part of the film reel mounting shown in Figure 2;
Figure 3 is an exploded view of means for adjusting the height of the support stand; and,
Figure 4 is a schematic illustration of a bale wrapper apparatus of the rotating turntable type, and on which a support stand of the invention can be mounted.

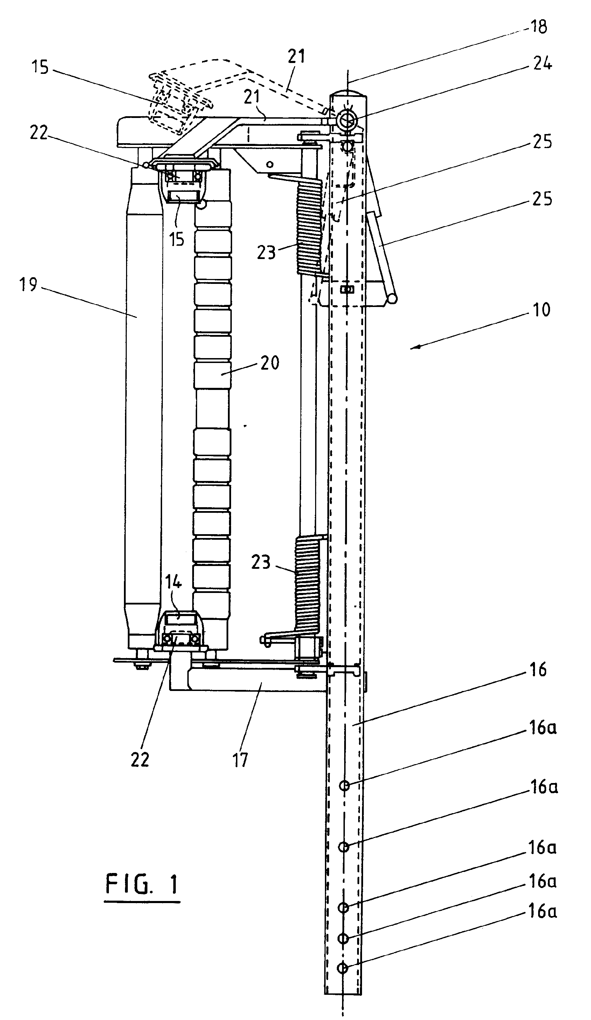

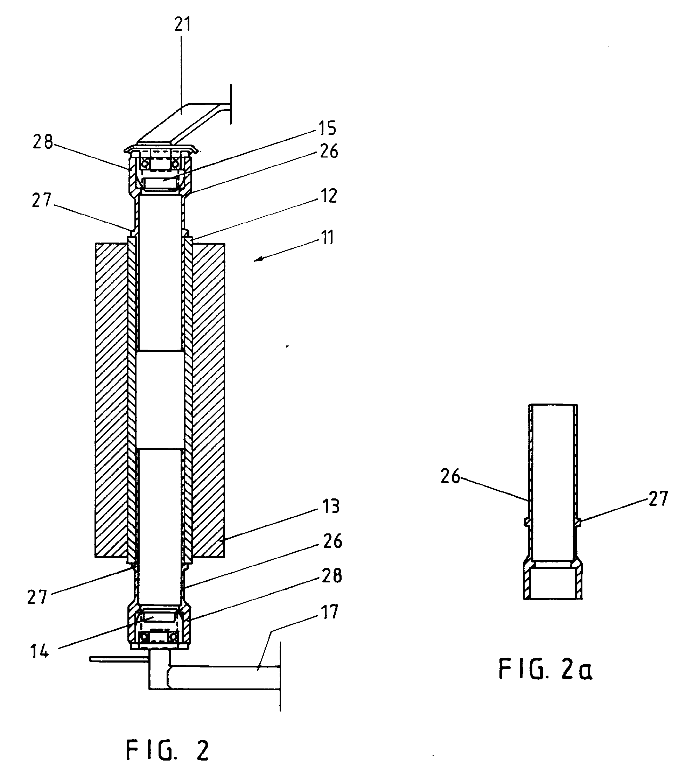

Referring now Figures 1 and 2 of to the drawings, a support stand according to the invention is designated generally by reference 10 and is intended for mounting either one of two sizes of film dispenser reel in a substantially vertical attitude, with the reel comprising a hollow cylindrical former and a plastics film wound around the former.

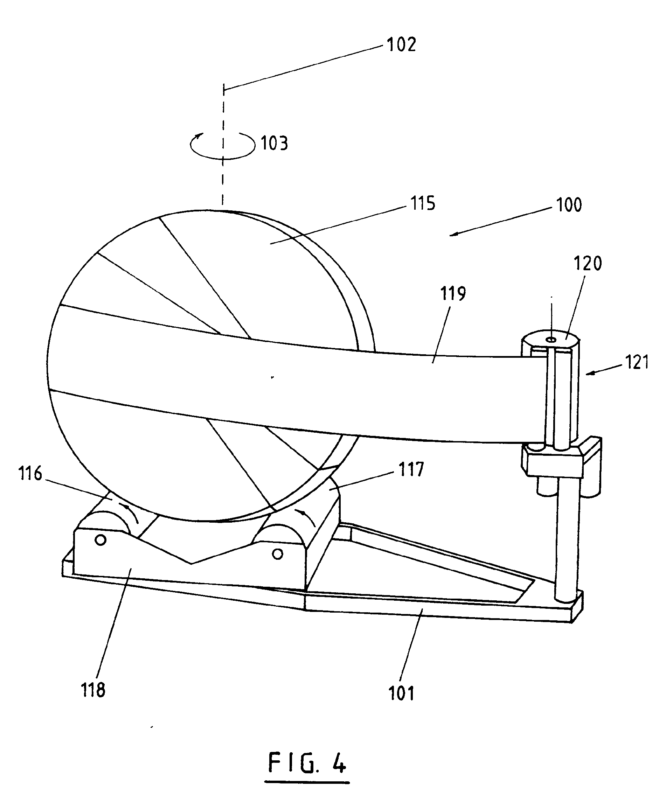

The support stand 10 is intended to be mounted on a rotating turntable type of bale wrapper apparatus, such as the Silawrap bale wrapper machine made by Kverneland Underhaug AS and sold in Great Britain by Volac Limited. One example of this type of bale wrapper apparatus is disclosed in more detail in GB 2159489B. Also, Figure 4 of the accompanying drawings shows schematically a rotating turntable type of bale wrapper apparatus on which the support stand can be mounted.

Referring now to Figure 4 of the drawings, the bale wrapper apparatus is designated generally by reference 100, and comprises a chassis 101 which can be supported by ground wheels (not shown) to enable the apparatus to be towed behind a tractor or other propelling vehicle, or alternatively it may be coupled directly on the rear of the propelling vehicle, such as a tractor, via the usual rear three point hitch.

The apparatus 100 has a turntable 118 rotatably mounted on the chassis 101 for rotation about a substantially vertical axis 102 in the direction of the arrow 103. A cylindrical bale 115 is mounted on the turntable 118 with the longitudinal axis of the bale extending substantially horizontal, the bale being supported by a pair of laterally spaced horizontal support rollers 116 and 117 which are mounted on the turntable 118.

Simultaneous with the rotation of the turntable 118 about vertical axis 102, the rollers 116 and 117 are operated to drive the bale 115 in a clockwise direction as indicated by arrow 104, about its horizontal axis.

A support stand 121 is mounted on the chassis 101 and comprises a film pre-stretcher unit 120, as disclosed in more detail in EPA-0291483, and which includes a mounting for a film dispenser reel of stretchable plastics film, from which can be withdrawn a continuous band 119 of film to be wrapped around the bale 115. By virtue of the combined rotation of the bale 115 about both horizontal and vertical axes simultaneously, a helical wrapping of plastics film is applied around the bale with progressively overlapping turns, until such time as the bale has been completely wrapped twice.

The support stand which is shown in Figures 1 to 3, and which will be described in more detail below, can be mounted on the chassis of a bale wrapper apparatus, in generally similar manner, to the mounting of the unit 121 on chassis 101 in Figure 4.

Referring now to Figures 1 to 3, the film dispenser reel used with the bale wrapper apparatus comprises a stretchable plastics film which is self adhesive on one side, and by virtue of the rotation of the cylindrical bale about its horizontal axis, while simultaneously causing relative rotation between the film dispenser reel and the bale about a vertical axis, film withdrawn from the reel undergoes pre-stretching and is then applied in a spiral around the bale in order progressively to envelope the bale.

The support stand 10 is able to mount film dispenser reels of different size therein, without any modification being required to the support stand itself. Thus, in Figure 2, there is shown a relatively small film reel 11, which is a 500mm band width reel having a hollow cylindrical former 12 on which a band of plastics film 13 is wound. As can be seen clearly from Figure 2, the length of the former 12 is appreciably less than the spacing apart of lower reel holder 14 and upper reel holder 15 which are carried by the support stand 10. However, film dispenser reels of greater band width than band 13 can readily be mounted between the holders 14 and 15, as will be described in more detail below.

The support stand 10 comprises an upright support in the form of post or column 16 which can be mounted rigidly on the bale wrapper apparatus. As shown in Figure 1, the lower part of column 6 has holes 16a which enable the height of the column to be adjusted in a suitable mounting on the apparatus, to provide adjustment of the height of the pre-stretch unit to suit different sizes of bale. This adjustment may be necessary. because it is important to ensure, as far as possible, that the withdrawn band of film is located substantial symmetrically with respect to the longitudinal axis of the bale which is being wrapped.

Alternatively, a screw threaded adjustment (not shown in Figure 1) may be provided for adjusting the height of the pre-stretch unit. Lower reel holder 14 is mounted on the support column 16 via a lower cradle arm 17 which is pivotally mounted on column 16 for movement about the axis 18 of the column, and which is biased about axis 18 in a direction opposed to the direction of withdrawal of film from the reel during a bale wrapping operation. This enables the withdrawn film to be pre-stretched before it is applied to the bale, after engaging pre-stretching rollers 19 and 20, in a manner which is disclosed in more detail in EP 0291483.

The upper reel holder 15 is also mounted on the support column 16 via carrier arm 21, and is shown in Figure 1 in full lines in a reel-engaging position, and in dashed outline in a release position.

As can be seen from the drawing, each holder 14, 15 is cup-shaped so as to receivable by a respective mounting socket provided at each end of a cylindrical former of a film dispenser reel. Each cup-shaped holder therefore comprises a stub axle mounting which can be mounted in a respective end of the film dispenser reel to locate and to rotatably support the film dispenser reel. Thus, each holder 14, 15 is mounted on bearings 22 which permit rotation of the cylindrical former of the film dispenser reel.

The lower holder 14 is pivotally movable in a horizontal plane during film withdrawal against spring biasing provided by springs 23, but is incapable of vertical movement i.e. movement in a direction parallel to the axis 18 of support column 16. However, the upper holder 15 is pivotally adjustable relative to support column 16 by adjustable movement of carrier arm 21 about pivot 24 mounted on the upper end of column 16. Pivotal adjustment of carrier arm 21 can take place under the action of a lever arm 25 which can take up either one of two positions shown in Figure 1, the full line position representing a releasably retained position corresponding to the engaged position of the holder 15, and the dashed outline position showing the retained position of the lever 25 corresponding to the release position of holder 15. In the release position of the holder 15, a spent reel can readily be removed from the support stand by disengagement from the lower holder 14, and a replacement reel can readily be mounted in its place by first making engagement with the lower holder 14, and then the upper holder 15 is returned to its engaged position.

Therefore, by virtue of the adjustable mounting (preferably a pivotable mounting) of the upper holder 15, and the simple cup-shaped engagements of the holders 14 and 15 with the ends of the reel, it is a simple matter to manipulate even long reels into the support stand, as it is only necessary initially to line up one end of the reel with the non-adjustable cup-shaped holder. In the illustrated embodiment, it is the lower holder 14 which is non-adjustable, and the upper holder 15 which is pivotally adjustable, and this is a preferred arrangement as it will assist persons of small stature to fit long replacement film dispenser reels. However, it is within the scope of the invention for the roles to be reversed so that the upper holder 15 is fixed vertically, and the lower holder 14 can be pivotally adjusted to a release position.

The vertical spacing apart of the holders 14 and 15 is such as to enable a long film dispenser reel (not shown) to be mounted directly in engagement therewith, and taking the form of a 750mm band width film dispenser reel. However, if the smaller film dispenser reels (see Figure 2) presently used widely to wrap bales are required to be installed in the stand 10, namely 500mm band width reels, this can readily be carried out without any modification being made to the support stand 10. Thus, as shown in Figure 2, 500mm band width reel 11 is located in position by engagement with the holders 14 and 15, and also rotatably mounted thereon, by providing tubular adapters 26 (see also Figure 2a). Each tubular adapter 26 can be received securely as a press fit in one of the ends of cylindrical former 12, and has a locating flange 27 which limits the depth of insertion of the adapter 26 and which seats against one of the end faces of the former 12. Each adapter 26 therefore forms an extension piece to bring the overall length of the reel 11 up to that of the longer type of reel (not shown) which can be mounted directly on holders 14 and 15. Thus, each tubular adapter 26 has an end socket 28 in which the respective cup-shaped holder 14, 15 can be received.

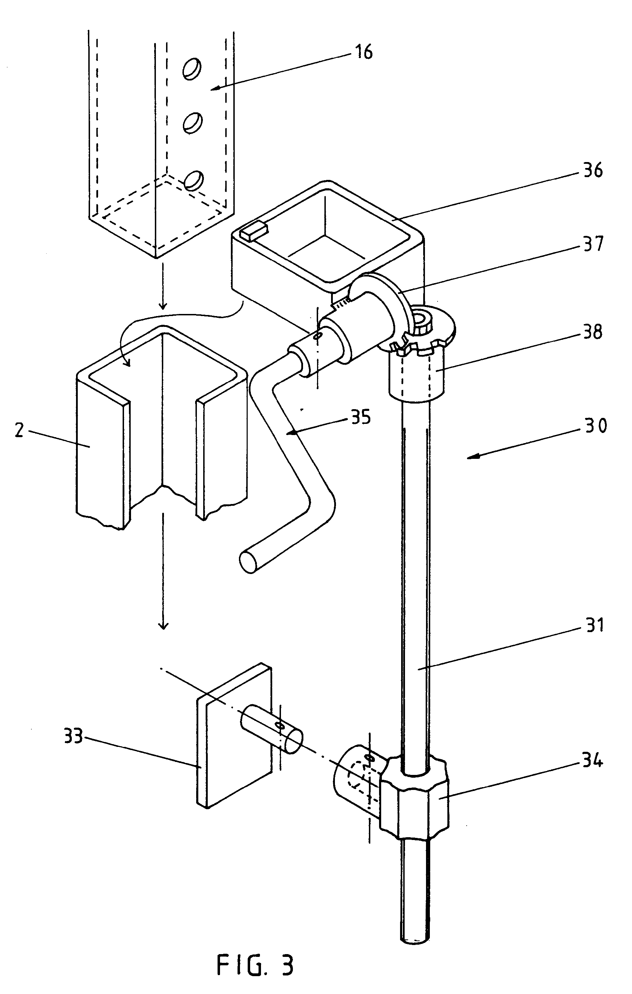

Referring now to Figure 3 of the drawings, there is shown an alternative adjusting means for adjusting the height of the film dispenser reel 11 relative to a bale which is to be wrapped. In the arrangement shown in Figure 1, the support 16 can be vertically adjusted by being slid vertically upwardly or downwardly relative to a fixed tubular mounting, and when the required height adjustment has been reached, a locking pin can be taken through any required one of the holes 16a and through mounting holes provided in the tubular mounting. However, this can be a difficult task for a person of small stature, as the weight of the support stand, and a film dispenser reel can be considerable, and therefore the arrangement shown in Figure 3 is proposed to facilitate the raising and lowering operation.

The adjustment mechanism is designated generally by reference 30 and comprises a screw threaded adjustment mechanism 31 which is coupled with the upright support 16. The support 16 can be slid vertically relative to a fixed tubular mounting 32, and a lower end 33 of the support 16 is coupled with the adjustment mechanism 31 via an internally threaded support block 34.

A hand operated crank 35 is rotatably mounted on a support bracket 36 which is secured to the upper end of the mounting 32, and the crank 35 has a gear 37 which meshes in the manner of bevel gears with a crown wheel 38 secured to the upper end of the adjustment mechanism 31.

Evidently, rotation of the crank 35 will cause rotation of the adjustment mechanism 31, which comprises an externally threaded rod, and this then causes the block 34 to be raised or lowered along the length of the rod, and thereby to adjust the height of the support 16.

The adjusting means shown in Figure 3 provides a mechanism which can be operated easily even by people of small stature, and enables the entire support stand 10 and film dispenser reel to be vertically adjusted, to suit different bale diameters. In this respect, it should be borne in mind that satisfactory bale wrapping can only be carried out by locating the mid region of the dispenser reel substantially in line with the horizontal axis of rotation of the bale which is to be wrapped. The adjustment mechanism enables height adjustments to be carried out in simple manner, and also enables small adjustments to be carried out, which is not possible with the arrangement shown in Figure 1, in which stepped adjustments only are possible, by virtue of the spacing apart of the holes 16a.

## Claims

1. A support stand (10) for mounting a film dispenser reel (11) in a substantially vertical attitude, said reel comprising a hollow cylindrical former (12) and a band (13) of plastics film wound around the former (12), and said stand comprising:
an upright support (16);
a lower reel holder (14) mounted on the support (16) and arranged to support a lower end of the reel, and an upper reel holder (15) mounted on the support (16) and arranged to engage an upper end of the reel;
characterised in that the upper holder (15) is mounted on a carrier arm (21) which is pivotally adjustably mounted on the support (16), and in that a lever (25) is coupled with the carrier arm (21) and is operable to adjust the upper holder (15) between an operative position of engagement with the upper end of the reel (11), and a release position permitting the reel to be mounted in or dismounted from engagement with the lower holder (14).

2. A support stand according to Claim 1, characterised in that means is provided to enable the lever (25) to be releasably retained in either of its two positions.

3. A support stand according to Claims 1 or 2, characterised in that a long reel can be fitted in the support stand (10), and in that cup-shaped supports of the upper and lower holders (14, 15) can be received by mounting sockets in the ends of the cylindrical former.

4. A support stand according to any one of Claims 1 to 3, characterised in that a small reel (11) can be mounted in the support stand (10) and including tubular adapters (26) which can be coupled with each end of the cylindrical former (12) of the reel (11) to form an extension piece which brings the overall length of the smaller reel (11) up to that of a longer reel, with each adapter having an end socket (28) in which a respective cup-shaped support of each holder (14, 15) can be received.

5. A support stand according to any one of Claims 1 to 4, characterised in that the upright support (16) comprises a 7column which can be rigidly mounted in an upright position on a bale wrapper apparatus.

6. A support stand according to any one of Claims 1 to 5, characterised in that pre-stretch rollers (19, 20) form a unitary assembly with the upper and lower holders (15, 14) which is capable of pivoting about the axis of the support (16) against spring action (23) during withdrawal of film from the reel.

7. A support stand according to any one of Claims 1 to 6, characterised in that the upright support (16) is adjustable in height so as to permit adjustment in height of the film dispenser reel (11) relative to a bale which is to be wrapped.

8. A support stand according to Claim 7, including a screw threaded adjustment mechanism (30) for adjusting the height of the support (16).

9. A support stand according to Claim 8, including a hand operated crank (35) coupled with the adjustment mechanism (31).

## Patentansprüche

1. Halterung (10) zum Montieren einer Folien-Spende-Spule (11) in im wesentlichen senkrechter Stellung, wobei die Spule einen hohlen zylindrischen Kern (12) und ein Band (13) aus Kunststoffolie, das um den Kern (12) gewickelt ist, umfaßt, und wobei die Halterung umfaßt:
einen aufrechten Ständer (16);
einen unteren Spulenhalter (14), der an dem Ständer (16) montiert und so eingerichtet ist, daß er das untere Ende der Spule tragen kann, sowie einen oberen Spulenhalter (16), der an den Trager (16) montiert und so eingerichtet ist, daß er an dem oberen Ende der Spule angreifen kann, dadurch gekennzeichnet, daß der obere Halter (15) an einem Tragarm (21) montiert ist, der gelenkig und einstellbar an dem Ständer (16) montiert ist, und daß ein Hegel (25) mit dem Tragarm (21) gekoppelt und so betätigbar ist, daß der obere Halter (15) wahlweise in eine Funktionsstellung in Eingriff mit dem oberen Ende des Spule (11) und in eine Freigabestellung, in welcher die Spule in dem unteren Halter (14) montiert oder von diesem abgenommen werden kann, gebracht werden kann.

2. Halterung nach Anspruch 1, dadurch gekennzeichnet, daß eine Einrichtung vorgesehen ist, mit welcher der Hebel (25) lösbar in beiden Stellungen festhaltbar ist.

3. Halterung nach Anspruch 1 oder 2, dadurch gekennzeichnet, daß eine lange Spule in der Halterung (10) unter gebracht werden kann und daß schalenförmige Halteelemente des oberen und unteren Halters (14, 15) von Montagesockeln in den Enden des Zylindrischen Kernes aufgenommen werden können.

4. Halterung nach einem des Ansprüche 1 bis 3, dadurch gekennzeichnet, daß einen kleine Spule (11) in der Halterung (10) montiert werden kann, wozu rohrförmige Adapter (26) vorgesehen sind, welche an jedes Ende des zylindrischen Kernes (12) der Spule (11) gekoppelt werden und so Verlängerungen bilden können, welche die gesamte Längsabmessung der kleineren Spule (11) auf diejenige einer längeren Spule bringen, wobei jeder Adapter einen Endsockel (28) aufweist, in welchem ein entsprechendes schalenförmiges Halteelement von jedem Halter (14, 15) aufgenommen werden kann.

5. Halterung nach einem der Ansprüche 1 bis 4, dadurch gekennzeichnet, daß der aufrechte Ständer (16) eine Säule umfaßt, die starr in aufrechter Position an einer Ballen-Wickelvorrichtung montiert werden kann.

6. Halterung nach einem des Ansprüche 1 bis 5, dadurch gekennzeichnet, daß Vorspannwalzen (19, 20) mit dem oberen und dem unteren Halter (15, 14) eine baueinheitliche Anordnung bilden, welche um die Achse des Ständers (16) gegen die Wirkung einer Feder (23) beim Abziehen der Folie von der Spule verschwenden kann.

7. Halterung nach einem der Ansprüche 1 bis 6, dadurch gekennzeichnet, daß der aufrechte Ständer (16) in der Höhe einstellbar ist, derart, daß eine Einstellung der Höhe der Folien Spende-Spule (11) gegenüber einem Ballen, der umwickelt werden soll, möglich ist.

8. Halterung nach Anspruch 7, dadurch gekennzeichnet, daß sie einen Schraubengewinde-Einstellmechanismus (30) zur Einstellung der Höhe des Ständer (16) enthält.

9. Halterung nach Anspruch 8, dadurch gekennzeichnet, daß sie eine Handkurbel (35) enthält, die mit dem Einstellmechanismus (31) gekoppelt ist.

## Revendications

1. Dispositif de support (10) pour le positionnement d'une bobine de film (11) dans une position essentiellement verticale, ladite bobine comprenant un gabarit cylindrique creux (12) et une bande (13) de film plastique enroulée autour du gabarit (12), ledit dispositif comprenant :
- un support vertical (16) ;
- un porte-bobine inférieur (14) monté sur le support (16) et conçu pour supporter l'extrémité inférieure de la bobine et un porte-bobine supérieur (15) monté sur le support (16) et conçu pour coopérer avec l'extrémité supérieure de la bobine ;
caractérisé en ce que le porte-bobine supérieur (15) est monté sur un bras porteur (21) monté de façon pivotante sur le support (16), et en ce qu'un levier (25) est couplé avec le bras porteur (21) et est mis en oeuvre pour placer le porte-bobine supérieur (15) dans une position opérationnelle dans laquelle il coopère avec l'extrémité supérieure de la bobine (11) et dans une position de repos permettant à la bobine d'être engagée dans le porte-bobine inférieur (14) ou désengagé de celui-ci.

2. Dispositif de support selon la revendication 1 caractérisé en ce qu'il inclut des moyens pour permettre au levier (25) d'être retenu, de façon réversible, dans l'une ou l'autre des deux positions.

3. Dispositif de support selon les revendications 1 ou 2, caractérisé en ce qu'une longue bobine peut être installée dans le dispositif de support (10), et en ce que des supports en forme de godet des portes-bobines supérieur et inférieur (14) (15) peuvent recevoir des embouts fixés aux extrêmités du gabarit cylindrique.

4. Dispositif de support selon l'une quelconque des revendications 1 à 3 caractérisé en ce qu'une petite bobine (11) peut être montée dans le dispositif de support (10), et en ce qu'il inclut des adaptateurs tubulaires (26) qui peuvent être couplés à chacune des extrêmités du gabarit cylindrique (12) de la bobine (11) pour former une pièce d'extension qui porte la longueur hors-tout de la bobine la plus petite (11) à celle de la bobine plus longue, chacun des adaptateurs présentant un embout d'extrémité (28) pouvant respectivement coopérer avec le support en forme de godet de chaque porte-bobine (14, 15).

5. Dispositif de support de bobine selon l'une quelconque des revendications 1 à 4 caractérisé en ce que le support vertical (16) comprend une colonne qui peut être positionnée de façon rigide dans une position verticale sur un appareil enveloppeur de balle.

6. Dispositif de support selon l'une quelconque des revendications 1 à 5 caractérisé en ce que des rouleaux de pré-étirage (19, 20) forment, avec les portes-bobines supérieur et inférieur (15, 14) un ensemble unitaire capable de pivoter selon l'axe du support (16) sous l'action d'un ressort (23) au cours du retrait du film de la bobine.

7. Dispositif de support selon l'une quelconque des revendications 1 à 6 caractérisé en ce que le support vertical (16) peut être ajusté en hauteur de façon à permettre un ajustement en hauteur de la bobine de film (11) par rapport à une balle à envelopper.

8. Dispositif de support selon la revendication 7 incluant un mécanisme d'ajustement à vis filetée (30) permettant d'ajuster la hauteur du support (16).

9. Dispositif de support selon la revendication 8, incluant une manivelle (35) couplée au mécanisme d'ajustement (31).
